# EUROPEAN PATENT APPLICATION

(11) **EP 4 561 016 A1**
(43) Date of publication of application: **28.05.2025**
(21) Application number: 22952556.3
(22) Date of filing: 29.07.2022
(51) Int. Cl.: H04L 61/50

(54) **ADDRESS CONFLICT DETECTION METHOD AND APPARATUS**

(71) Applicant: Huawei Technologies Co., Ltd., Shenzhen, Guangdong 518129 (CN)
(72) Inventor: ZHANG, Xudong, Shenzhen, Guangdong 518129 (CN); LIU, Guoquan, Shenzhen, Guangdong 518129 (CN); WANG, Yali, Shenzhen, Guangdong 518129 (CN); TANG, Weiping, Shenzhen, Guangdong 518129 (CN); WANG, Jian, Shenzhen, Guangdong 518129 (CN)
(74) Representative: Körber, Martin Hans
(86) International application number: PCT/CN2022/109207
(87) International publication number: WO 2024/021109

(57) **Abstract**

An address conflict detection method and apparatus are provided. The method includes: A first node sends a first message, where the first message includes a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured. The first node receives a second message from a second node, where the second message indicates whether an address conflict exists in the first network address. According to this method, whether an address conflict exists in a network in an entire network can be detected, and a user is prompted with a root cause of the address conflict in time, to help the user eliminate address conflict configuration as soon as possible and effectively reduce impact on a service.

## Description

### TECHNICAL FIELD

This application relates to the communication field, and in particular, to an address conflict detection method and apparatus.

### BACKGROUND

Wireless communication is widely used in scenarios such as smart automobiles, smart homes, smart terminals, and smart manufacturing. Compared with wired communication, wireless communication can effectively reduce a harness length, a harness weight, and a quantity of connectors.

Generally, in a wireless network, an address conflict may occur due to incorrect networking or incorrect configuration. When an address conflict exists in the network, faults such as network route flapping and network service or traffic interruption may be caused, and these faults greatly affect user services. Therefore, how to detect whether an address conflict exists in a network and prompt a user with a root cause of the address conflict in time, to help the user eliminate address conflict configuration as soon as possible and effectively reduce impact on a service is a technical problem to be resolved by a person skilled in the art.

### SUMMARY

This application discloses an address conflict detection method and apparatus, to detect whether an address conflict exists in a network in an entire network, and notify a user of a root cause of the address conflict in time, so as to help the user eliminate an address conflict configuration as soon as possible and effectively reduce impact on a service.

According to a first aspect, this application provides an address conflict detection method. The method includes: A first node sends a first message, where the first message includes a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and the first node receives a second message from a second node, where the second message indicates whether an address conflict exists in the first network address.

The method may be applied to scenarios such as vehicle-mounted communication, a smart home, and a battery management system (battery management system, BMS). In a vehicle-mounted communication scenario, a node that is in a first node network and that initiates network address detection or query, and any node other than the first node in a second node network may be, for example, a user terminal in a vehicle or a component (for example, a board, a line card, or a chip) in a user terminal. The user terminal may be, for example, a mobile phone, a tablet computer, a palmtop computer, a desktop computer, a headset, a sound box, a wearable device, a vehicle-mounted device, a virtual reality device, an augmented reality device, or a telematics box (Telematics BOX, T-Box). In a smart home scenario, a node that is in the first node network and that initiates network address detection or query, and any node other than the first node in the second node network may be, for example, a home device or a component in a home device. The home device may be, for example, a television, a floor sweeping robot, a printer, a projector, a user mobile phone, a rice cooker, a sound box, a microphone, or a wireless router, or may be a gateway, customer premises equipment (customer premises equipment, CPE), a wireless router, or a user mobile phone. In a BMS scenario, a node that is in the first node network and that initiates network address detection or query, and any node other than the first node in the second node network may be, for example, a battery monitoring unit (battery monitoring unit, BMU), a battery control unit (battery control unit, BCU), or a BMU.

In the foregoing method, the first message includes the target network address field, the address type field, and the target system identifier field, so that address conflict detection can be implemented in an entire network. In this way, a user is notified in time of a root cause of the address conflict, to help the user eliminate an address conflict configuration as soon as possible and effectively reduce impact on a service. In addition, the first message includes the address type field, so that address conflict detection of a plurality of address types can be implemented. This improves diversity.

In a possible implementation, the plurality of address types include at least two of the following: a SparkLink network address, a custom address, an internet protocol version 4 (IPv4) address, or an internet protocol version 6 (IPv6) address.

The SparkLink network address is a network layer short address, may have a length of 2 bytes (namely, 16 bits), and may be used for addressing in a corresponding communication system. For example, for a SparkLink communication technology, the SparkLink network address may be used for addressing in a SparkLink communication system. It may be understood that the SparkLink network address is another address type different from an IP address.

In another possible implementation, when the first message is a request message, the target system identifier field is a default value or a fixed value. The request message is used to query whether an address conflict exists in the first network address. For example, when the first message is a request message, the target system identifier field may be a default value, for example, 0. For another example, when the first message is a request message, the target system identifier field may be a fixed value.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node. The identification information of the second node is used to identify the second node, and may be configured by the user, or may be obtained based on an identifier of a device. The identifier of the device may be a layer 2 identifier (Layer 2 Identification, L2ID).

In another possible implementation, the first message or the second message further includes at least one of the following: a network address length field, a source network address field, a source system identifier field, or a reserved field. The network address length field indicates a length of the target network address field or the source network address field, and is in a unit of byte. For example, when the target network address or the source network address field is of the type 4 and occupies a maximum of 4 bytes, the address length indicated by the network address length field is 4. The source network address field indicates the network address of the node that initiates detection or query, and may be a unicast address. The source system identifier field indicates the identifier of the node that initiates detection or query.

In another possible implementation, at least one of a length of the target network address field and a length of the source network address field is variable.

In another possible implementation, if a second network address is configured for the first node, the source network address field in the second message includes the second network address, where the second network address is different from the first network address. It may be understood that, when the second network address is configured for the first node, the second node may send the second message to the first node in a unicast manner. This can reduce signaling overheads.

In another possible implementation, if no network address other than the first network address is configured for the first node, the source network address field in the second message is a default value or a fixed value. It may be understood that, when no network address other than the first network address is configured for the first node, the second node may send the second message to the first node in a broadcast manner.

In another possible implementation, the address type field is indicated by using N bits, and when a value of the N bits is a first value, the first address type is indicated, where N is a positive integer greater than 0. For example, when the first value is 0000001, it indicates that the first address type is a SparkLink network address. When the first value is 0000010, it indicates that the first address type is a custom address. When the first value is 0000100, it indicates that the first address type is an IPv4 address. When the first value is 0000110, it indicates that the first address type is an IPv6 address.

In another possible implementation, the first message includes a frame header part and a data part, the data part includes an address query protocol part, and the address query protocol part includes the target network address field, the address type field, and the target system identifier field. The address query protocol part may further include the network address length field, the source network address field, the source system identifier field, or the reserved field.

According to a second aspect, this application provides an address conflict detection method. The method includes: A second node receives a first message, where the first message includes a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and the second node sends a second message to a first node, where the second message indicates whether an address conflict exists in the first network address.

In the foregoing method, the first message includes the target network address field, the address type field, and the target system identifier field, so that address conflict detection can be implemented in an entire network. In this way, a user is notified in time of a root cause of the address conflict, to help the user eliminate an address conflict configuration as soon as possible and effectively reduce impact on a service. In addition, the first message includes the address type field, so that address conflict detection of a plurality of address types can be implemented. This improves diversity.

In a possible implementation, the plurality of address types include at least two of the following: a SparkLink network address, a custom address, an internet protocol version 4 (IPv4) address, or an internet protocol version 6 (IPv6) address.

The SparkLink network address is a network layer short address, may have a length of 2 bytes (namely, 16 bits), and may be used for addressing in a corresponding communication system. For example, for a SparkLink communication technology, the SparkLink network address may be used for addressing in a SparkLink communication system. It may be understood that the SparkLink network address is another address type different from an IP address.

In another possible implementation, when the first message is a request message, the target system identifier field is a default value or a fixed value. The request message is used to query whether an address conflict exists in the first network address. For example, when the first message is a request message, the target system identifier field may be a default value, for example, 0. For another example, when the first message is a request message, the target system identifier field may be a fixed value.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node. The identification information of the second node is used to identify the second node, and may be configured by the user, or may be obtained based on an identifier of a device. The identifier of the device may be a layer 2 identifier (Layer 2 Identification, L2ID).

In another possible implementation, the first message or the second message further includes at least one of the following: a network address length field, a source network address field, a source system identifier field, or a reserved field. The network address length field indicates a length of the target network address field or the source network address field, and is in a unit of byte. For example, when the target network address or the source network address field is of the type 4 and occupies a maximum of 4 bytes, the address length indicated by the network address length field is 4. The source network address field indicates the network address of the node that initiates detection or query, and may be a unicast address. The source system identifier field indicates the identifier of the node that initiates detection or query.

In another possible implementation, at least one of a length of the target network address field and a length of the source network address field is variable.

In another possible implementation, if a second network address is configured for the first node, the source network address field in the second message includes the second network address, where the second network address is different from the first network address. It may be understood that, when the second network address is configured for the first node, the second node may send the second message to the first node in a unicast manner. This can reduce signaling overheads.

In another possible implementation, if no network address other than the first network address is configured for the first node, the source network address field in the second message is a default value or a fixed value. It may be understood that, when no network address other than the first network address is configured for the first node, the second node may send the second message to the first node in a broadcast manner.

In another possible implementation, the address type field is indicated by using N bits, and when a value of the N bits is a first value, the first address type is indicated, where N is a positive integer greater than 0. For example, when the first value is 0000001, it indicates that the first address type is a SparkLink network address. When the first value is 0000010, it indicates that the first address type is a custom address. When the first value is 0000100, it indicates that the first address type is an IPv4 address. When the first value is 0000110, it indicates that the first address type is an IPv6 address.

In another possible implementation, the first message includes a frame header part and a data part, the data part includes an address query protocol part, and the address query protocol part includes the target network address field, the address type field, and the target system identifier field. The address query protocol part may further include the network address length field, the source network address field, the source system identifier field, or the reserved field.

According to a third aspect, this application provides an address conflict detection method. The method includes: A first node receives a first message from a second node, where the first message includes a network address of a third node and a target network address, the third node is a neighbor of the second node, and the third node is a relay node of the first node and the second node; the first node stores a node network address mapping table, where the node network address mapping table is used for address conflict detection; the first node determines, based on the node network address mapping table, whether an address conflict exists in the target network address, where the node network address mapping table indicates a mapping relationship between identification information of a plurality of nodes and network addresses of the plurality of nodes, where the plurality of nodes include the second node and the third node; and the first node sends a second message to the second node, where the second message indicates that no address conflict exists in the target network address, and the second message is a unicast message; or the first node sends a third message to the second node by using the third node, where the third message indicates that the address conflict exists in the target network address.

In the foregoing method, the first node may send the second message to the second node in a unicast manner, or send the third message to the third node in a unicast manner. In this manner, more load caused by a broadcast packet to a network can be avoided. This reduces network overheads. In addition, in a manner in which the first node stores the node network address mapping table, the first node can detect an address conflict in the entire network.

In a possible implementation, the second node is a terminal node.

In another possible implementation, that the first node determines, based on the node network address mapping table, whether an address conflict exists in the target network address includes: The first node matches the target network address with the network addresses of the nodes in the node network address mapping table; and if the matching succeeds, the first node determines that the address conflict exists in the target network address; or if the matching fails, the first node determines that no address conflict exists in the target network address.

According to a fourth aspect, this application provides an address conflict detection method. The method includes: A second node sends a first message to a first node, where the first message includes a network address of a third node and a target network address, the third node is a neighbor of the second node, and the third node is a relay node of the first node and the second node; the first node stores a node network address mapping table, where and the node network address mapping table is used to determine whether an address conflict exists in the target network address, and the node network address mapping table indicates a mapping relationship between identification information of a plurality of nodes and network addresses of the plurality of nodes, where the plurality of nodes include the second node and the third node; and the second node receives a second message from the first node, where the second message indicates that no address conflict exists in the target network address, and the second message is a unicast message; or the second node receives a third message from the third node, where the third message indicates that the address conflict exists in the target network address.

In the foregoing method, the first node may send the second message to the second node in a unicast manner, or send the third message to the third node in a unicast manner. In this manner, more load caused by a broadcast packet to a network can be avoided. This reduces network overheads. In addition, in a manner in which the first node stores the node network address mapping table, the first node can detect an address conflict in the entire network.

In a possible implementation, the second node is a terminal node.

According to a fifth aspect, this application provides an address conflict detection apparatus. The apparatus includes: a communication unit and a processing unit. The communication unit is configured to send a first message, where the first message includes a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured. The communication unit is further configured to receive a second message from a second node, where the second message indicates whether an address conflict exists in the first network address.

In a possible implementation, the plurality of address types include at least two of the following: a SparkLink network address, a custom address, an internet protocol version 4 (IPv4) address, or an internet protocol version 6 (IPv6) address.

In another possible implementation, when the first message is a request message, the target system identifier field is a default value or a fixed value. The request message is used to query whether an address conflict exists in the first network address.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node. In another possible implementation, the first message or the second message further includes at least one of the following: a network address length field, a source network address field, a source system identifier field, or a reserved field.

In another possible implementation, at least one of a length of the target network address field and a length of the source network address field is variable.

In another possible implementation, if a second network address is configured for the first node, the source network address field in the second message includes the second network address, where the second network address is different from the first network address.

In another possible implementation, if no network address other than the first network address is configured for the first node, the source network address field in the second message is a default value or a fixed value.

In another possible implementation, the address type field is indicated by using N bits, and when a value of the N bits is a first value, the first address type is indicated, where N is a positive integer greater than 0.

In another possible implementation, the first message includes a frame header part and a data part, the data part includes an address query protocol part, and the address query protocol part includes the target network address field, the address type field, and the target system identifier field.

For technical effect brought by the fifth aspect or the possible implementations, refer to the descriptions of the technical effect brought by the first aspect or the corresponding implementations.

According to a sixth aspect, this application provides an address conflict detection apparatus. The apparatus includes: a communication unit and a processing unit. The communication unit is configured to receive a first message, where the first message includes a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured. The communication unit is further configured to send a second message to a first node. The second message indicates whether an address conflict exists in the first network address.

In a possible implementation, the plurality of address types include at least two of the following: a SparkLink network address, a custom address, an internet protocol version 4 (IPv4) address, or an internet protocol version 6 (IPv6) address.

In another possible implementation, when the first message is a request message, the target system identifier field is a default value or a fixed value. The request message is used to query whether an address conflict exists in the first network address.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node.

In another possible implementation, the first message or the second message further includes at least one of the following: a network address length field, a source network address field, a source system identifier field, or a reserved field.

In another possible implementation, at least one of a length of the target network address field and a length of the source network address field is variable.

In another possible implementation, if a second network address is configured for the first node, the source network address field in the second message includes the second network address, where the second network address is different from the first network address.

In another possible implementation, if no network address other than the first network address is configured for the first node, the source network address field in the second message is a default value or a fixed value.

In another possible implementation, the address type field is indicated by using N bits, and when a value of the N bits is a first value, the first address type is indicated, where N is a positive integer greater than 0.

In another possible implementation, the first message includes a frame header part and a data part, the data part includes an address query protocol part, and the address query protocol part includes the target network address field, the address type field, and the target system identifier field.

For technical effects brought by the sixth aspect or the possible implementations, refer to the descriptions of the technical effects brought by the second aspect or the corresponding implementations.

According to a seventh aspect, this application provides an address conflict detection apparatus. The apparatus includes a communication unit and a processing unit. The communication unit is configured to receive a first message from a second node, where the first message includes a network address of a third node and a target network address, the third node is a neighbor of the second node, and the third node is a relay node of the apparatus and the second node. The apparatus stores a node network address mapping table, where the node network address mapping table is used for address conflict detection. The processing unit is configured to determine, based on the node network address mapping table, whether an address conflict exists in the target network address, where the node network address mapping table indicates a mapping relationship between identification information of a plurality of nodes and network addresses of the plurality of nodes, where the plurality of nodes include the second node and the third node. The communication unit is further configured to send a second message to the second node, where the second message indicates that no address conflict exists in the target network address, and the second message is a unicast message. Alternatively, the communication unit is further configured to send a third message to the second node by using the third node, where the third message indicates that the address conflict exists in the target network address.

In another possible implementation, the processing unit is configured to match the target network address with the network addresses of the nodes in the node network address mapping table. The processing unit is further configured to: if the matching succeeds, determine that the address conflict exists in the target network address. The processing unit is further configured to: if the matching fails, determine that no address conflict exists in the target network address.

For technical effect brought by the seventh aspect or the possible implementations, refer to the descriptions of the technical effect brought by the third aspect or the corresponding implementations.

According to an eighth aspect, this application provides an address conflict detection apparatus. The apparatus includes a communication unit and a processing unit. The communication unit is configured to send a first message to a first node, where the first message includes a network address of a third node and a target network address, the third node is a neighbor of the apparatus, and the third node is a relay node of the first node and the apparatus. The first node stores a node network address mapping table, where the node network address mapping table is used to determine whether an address conflict exists in the target network address, and the node network address mapping table indicates a mapping relationship between identification information of a plurality of nodes and network addresses of the plurality of nodes, where the plurality of nodes include the apparatus and the third node. The communication unit is configured to receive a second message from the first node, where the second message indicates that no address conflict exists in the target network address, and the second message is a unicast message. Alternatively, the communication unit is further configured to receive a third message from the third node, where the third message indicates that the address conflict exists in the target network address.

In a possible implementation, the apparatus is a terminal node.

For technical effect brought by the eighth aspect or the possible implementations, refer to the descriptions of the technical effect brought by the fourth aspect or the corresponding implementations.

According to a ninth aspect, this application provides an address conflict detection apparatus. The apparatus includes at least one processor and a communication interface. The communication interface is configured to provide information input and/or output for the at least one processor. The apparatus is configured to implement the method according to any one of the first aspect or the possible embodiments of the first aspect.

According to a tenth aspect, this application provides an address conflict detection apparatus. The apparatus includes at least one processor and a communication interface. The communication interface is configured to provide information input and/or output for the at least one processor. The apparatus is configured to implement the method according to any one of the second aspect or the possible embodiments of the second aspect.

According to an eleventh aspect, this application provides an address conflict detection apparatus. The apparatus includes at least one processor and a communication interface. The communication interface is configured to provide information input and/or output for the at least one processor. The apparatus is configured to implement the method according to any one of the third aspect or the possible embodiments of the third aspect.

According to a twelfth aspect, this application provides an address conflict detection apparatus. The apparatus includes at least one processor and a communication interface. The communication interface is configured to provide information input and/or output for the at least one processor. The apparatus is configured to implement the method according to any one of the fourth aspect or the possible embodiments of the fourth aspect.

According to a thirteenth aspect, this application provides a computer-readable storage medium, including computer instructions. When the computer instructions are run by a processor, the method according to any one of the first aspect or the possible implementations of the first aspect is implemented.

According to a fourteenth aspect, this application provides a computer program product. When the computer program product is executed by a processor, the method according to any one of the first aspect or the possible embodiments of the first aspect is implemented. The computer program product may be, for example, a software installation package. When the method provided according to any one of the foregoing aspects or any one of the possible designs of the foregoing aspects needs to be used, the computer program product may be downloaded and executed on a processor, to implement the method according to any one of the foregoing aspects or any one of the possible implementations of the foregoing aspects.

According to a fifteenth aspect, this application provides a communication system. The system includes a first apparatus and a second apparatus. The first apparatus is the apparatus according to any one of the fifth aspect or the possible implementations of the fifth aspect, or the apparatus according to any one of the seventh aspect or the possible implementations of the seventh aspect. The second apparatus is the apparatus according to any one of the sixth aspect or the possible implementations of the sixth aspect, or the apparatus according to any one of the eighth aspect or the possible implementations of the eighth aspect.

### BRIEF DESCRIPTION OF DRAWINGS

FIG. 1 is a diagram of some architectures of a communication system according to an embodiment of this application;
FIG. 2 is a diagram of a smart home wireless communication scenario according to an embodiment of this application;
FIG. 3 is a flowchart of an address conflict detection method according to an embodiment of this application;
FIG. 4 is a diagram of a scenario according to an embodiment of this application;
FIG. 5 is a diagram of another scenario according to an embodiment of this application;
FIG. 6 is a flowchart of another address conflict detection method according to an embodiment of this application;
FIG. 7 is a diagram of another scenario according to an embodiment of this application;
FIG. 8 is a diagram of another scenario according to an embodiment of this application;
FIG. 9 is a diagram of another scenario according to an embodiment of this application;
FIG. 10 is a flowchart of another address conflict detection method according to an embodiment of this application;
FIG. 11 is a diagram of another scenario according to an embodiment of this application;
FIG. 12 is a flowchart of another address conflict detection method according to an embodiment of this application;
FIG. 13 is a diagram of another scenario according to an embodiment of this application;
FIG. 14 is a diagram of a structure of an address conflict detection apparatus according to an embodiment of this application; and
FIG. 15 is a diagram of a structure of an address conflict detection apparatus according to an embodiment of this application.

### DESCRIPTION OF EMBODIMENTS

Terms used in embodiments of this application are merely for the purpose of describing specific embodiments, but are not intended to limit this application. In the specification and claims of this application, prefix words such as "first" and "second" are used only to distinguish between different described objects, and do not constitute any limitation on locations, a sequence, priorities, a quantity, content, or the like of the described objects. In embodiments of this application, use of the prefix words used to distinguish between the described objects does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., or an" is used, including a case in which any one of a1, a2, ..., and an exists alone, and also including a case of any combination of a1, a2, ..., and an. Each case may exist alone. For example, a description manner of "at least one of a, b, or c" includes a case of a single a, a single b, a single c, a combination of a and b, a combination of a and c, a combination of b and c, or a combination of a, b, and c.

The following describes the technical solutions of embodiments in this application with reference to accompanying drawings.

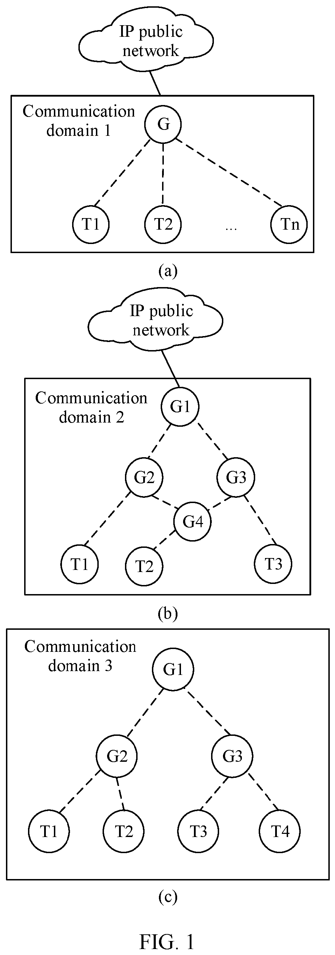

FIG. 1 is an example of a diagram of three architectures of a communication system to which embodiments of this application are applicable, for example, shown in (a), (b), and (c) in FIG. 1.

A communication domain includes a plurality of nodes, there is a communication connection relationship (namely, a communication link) between the nodes, and the nodes may exchange information through the communication link.

In a possible design, the plurality of nodes include at least one grant node and at least one terminal node. The grant node may also be referred to as a grant node (G node for short), and the terminal node may also be referred to as a terminal node (T node for short), or may be referred to as a wireless end system (wireless end system, WES) for short. The G node is configured to send data scheduling information at an access layer of a communication system (for example, a SparkLink communication system). The T node is configured to receive the data scheduling information at the access layer of the communication system, and send corresponding data based on the received data scheduling information.

(a) in FIG. 1 shows a star single-hop topology structure. In (a) in FIG. 1, a communication domain 1 includes a node G and a plurality of nodes T (for example, T1, T2, ..., and Tn), where the node G is an access point of each node T, the node G is a grant node in the communication domain 1, and the node G may allocate an IP address to the node T, for example, the node G serves as a DHCP server to allocate the IP address to the node T, or the node G serves as an IP address allocation agent to request a DHCP server to allocate the IP address to the node T. In some possible embodiments, the communication domain 1 may be, for example, a SparkLink domain in a SparkLink communication system. In this case, the node G may further allocate a network address of a communication domain address type to the node T, to implement addressing in the SparkLink communication system. In (a) in FIG. 1, communication between the node G and the node T may be bidirectional unicast, or may be broadcast communication of G->T.

Optionally, an architecture shown in (a) in FIG. 1 is applicable to a vehicle-mounted communication scenario. For example, in the vehicle-mounted communication scenario, the node G may be a telematics box (Telematics BOX, T-Box), and the node T may be a user terminal in a vehicle. The user terminal may be, for example, a mobile phone, a tablet computer, a palmtop computer, a desktop computer, a headset, a sound box, a wearable device, a vehicle-mounted device, a virtual reality device, or an augmented reality device. The T-Box may also be referred to as a remote vehicle-mounted terminal or an internet of vehicles communication terminal. The T-Box is generally used as a wireless gateway to provide a remote communication interface for the entire vehicle, and provides services including driving data collection, driving track recording, vehicle fault monitoring, remote vehicle query and control, driving behavior analysis, and wireless hotspot sharing. For example, the T-Box can send collected vehicle data (for example, drive motor data, vehicle data, battery data, and status data of a new energy vehicle) to a cloud platform, and forward a control instruction received from the cloud platform to the vehicle. Alternatively, the T-Box may establish a transmission channel with a mobile phone app through Bluetooth to control door opening, door locking, vehicle window control, air conditioner switch, and engine startup and shutdown.

(b) in FIG. 1 shows a tree-like multi-hop topology structure. In (b) in FIG. 1, a communication domain 2 includes nodes G1, G2, G3, G4, and nodes T1, T2, and T3, where the node G1 is separately connected to the nodes G2 and G3, the node G2 is further separately connected to the nodes T1 and G4, the node G3 is further separately connected to the nodes T3 and G4, and the node G4 is further connected to the node T2. It can be learned that the node G1 is an access point of the nodes G2 and G3, the node G2 is an access point of the nodes T1 and G4, the node G3 is an access point of the nodes T3 and G4, and the node G4 is an access point of the node T2. The node G1 is a grant node in the communication domain 2, that is, the node G1 has an address allocation function, and may allocate a network address to another node in the communication domain 2. When the nodes G2, G3, and G4 have their own network addresses, the nodes G2, G3, G4 may have an address allocation proxy service function.

It may be understood that, in this communication scenario, the communication domain 2 includes the plurality of nodes G (which are the nodes G1, G2, G3, and G4, respectively) and the plurality of nodes T (which are the nodes T1, T2, and T3, respectively). The node G1 is a grant node in the communication domain 2. The nodes G2, G3, and G4 are communication nodes with dual identities. The node G2 is used as an example. For communication between the node G2 and the node T1, the node G2 is used as a G node, and the node T1 is used as a T node. For communication between the node G2 and the node G1, the node G1 is used as a G node, and the node G2 is used as a T node. A communication node with dual identities, for example, G2, may be denoted as G2(T).

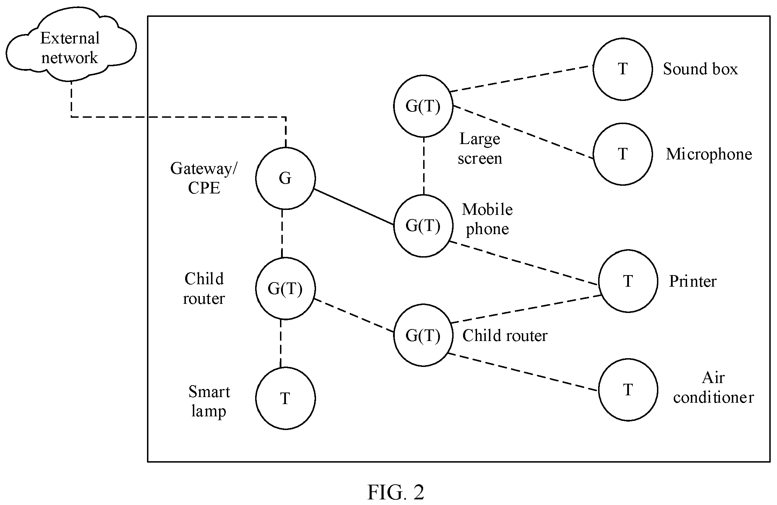

Optionally, an architecture shown in (b) in FIG. 1 is applicable to a smart home scenario. FIG. 2 is a diagram of a smart home wireless communication scenario according to an embodiment of this application. In FIG. 2, a node G has an IP capability, and the nodes G include gateway/customer premises equipment (customer premises equipment, CPE), a child router, a mobile phone, and a large screen. The grant node in the communication domain shown in FIG. 2 may be gateway/customer premises equipment (customer premises equipment, CPE). The node G with dual identities may be a child router, a mobile phone, and a large screen. T nodes in FIG. 2 includes a smart lamp, an air conditioner, a printer, a microphone, and a sound box, where the T nodes not only include a node G supporting IP, for example, a printer, but also include nodes G not supporting IP, for example, a smart lamp and an air conditioner.

(c) in FIG. 1 shows a tree-like three-layer multi-hop topology structure. In (c) in FIG. 1, a communication domain 3 includes nodes G1, G2, and G3 and nodes T1, T2, T3, and T4, where the node G1 is separately connected to the nodes G2 and G3, that is, the node G1 is an access point of the node G2 and the node G3, the node G2 is separately connected to the node T1 and the node T2, that is, the node G2 is an access point of the node T1 and the node T2, and the node G3 is separately connected to the node T3 and the node T4, that is, the node G3 is an access point of the node T3 and the node T4. The node G1 serves as a grant node in the communication domain 3, the node G1 may provide an address allocation service, and the nodes G2 and G3 may provide an address allocation proxy service. In (b) and (c) in FIG. 1, communication between the node G and the node T may be bidirectional unicast of T->G (T)->G, or broadcast communication of G->G (T)->T.

Optionally, an architecture shown in (c) in FIG. 1 is applicable to a battery management system (battery management system, BMS). For example, in (c) in FIG. 1, the node G1 may be a battery control unit (battery control unit, BCU) in the BMS, the nodes T1, T2, T3, and T4 may be battery monitoring units (battery monitoring units, BMUs), and the nodes G2 and G3 may be BMUs having an address allocation proxy service function.

It should be noted that FIG. 1 is merely a diagram of an example of an architecture, and may alternatively be a diagram of an architectural in another form, for example, may alternatively be a diagram in a tree-like four-layer (or more layers) multi-hop topology structure. Although not shown in FIG. 1, in addition to the functional entities shown in FIG. 1, the communication system may further include another functional entity.

In another possible design, the plurality of nodes may include at least one intermediate node and at least one address resolver node. The intermediate node may also be referred to as an intermediate node (I node for short), or may be referred to as a wireless intermediate system (wireless intermediate system, WIS) for short. The address resolver node may also be referred to as an address resolver node (A node for short). The I node is configured to: receive data scheduling information at an access layer of the communication system, and further forward the data scheduling information to the T node. The A node is configured to query a network address (for example, a SparkLink network address) of any node, a connection relationship between the I node and the T node, and the like. The I node and the T node may register network addresses of the I node and the T node with the A node, and identifiers of the nodes are carried.

In another possible design, the plurality of nodes may include at least one terminal node and at least one intermediate node. The at least one intermediate node forms a backbone network, and each end node in the at least one terminal node accesses the network by using one intermediate node in the at least one intermediate node.

In addition, the method provided in embodiments of this application may be applied to the communication system shown in FIG. 1. Certainly, the method provided in embodiments of this application may alternatively be applied to another communication system. This is not limited in embodiments of this application.

Generally, in a wireless network, incorrect networking or an incorrect configuration may cause an address conflict. If an address conflict exists in the network, faults such as network route flapping and network service or traffic interruption may be caused. These faults greatly affect user services. Therefore, how to detect whether an address conflict exists in a network and notify a user of a root cause of the address conflict in time, to help the user eliminate an address conflict configuration as soon as possible and effectively reduce impact on a service is a technical problem to be resolved by a person skilled in the art. To resolve the foregoing problem, embodiments of this application provide the following solutions.

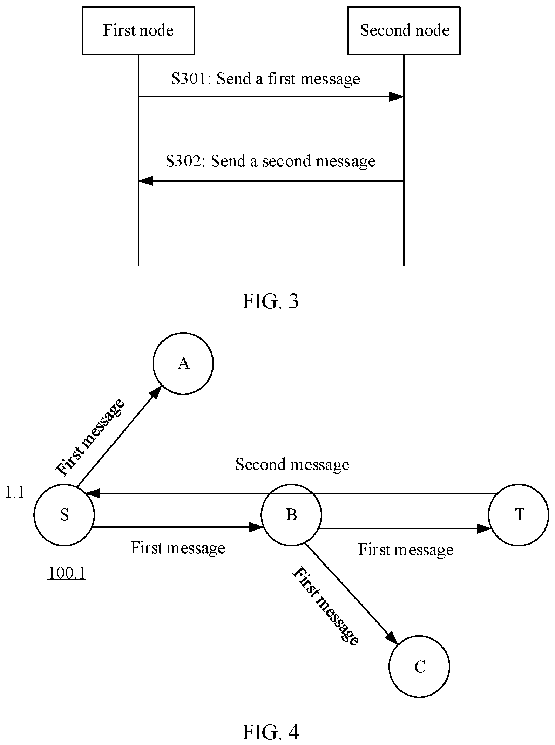

FIG. 3 is a flowchart of an address conflict detection method according to an embodiment of this application. Optionally, the method may be implemented based on the foregoing communication system, for example, the communication system shown in FIG. 1. The method includes but is not limited to the following steps.

S301: A first node sends a first message, and correspondingly, a second node receives the first message.

The first message is carried in a common layer broadcast protocol.

The first node may send the first message in a broadcast manner, and the first message includes a target network address field, an address type field, and a target system identifier field. The target network address field indicates a first network address, the address type field indicates a first address type corresponding to the first network address, and the first address type is one of a plurality of address types. The first network address may be a to-be-detected or to-be-queried network address, and may be a unicast address. The plurality of address types may include at least two of the following: a SparkLink network address, a custom address, an internet protocol version 4 (IPv4) address, or an internet protocol version 6 (IPv6) address. The SparkLink network address may be of a type 1, and occupies 2 bytes (namely, 16 bits). The SparkLink network address may be understood as an address used for a route defined in a SparkLink network, is a short address at a network layer, may have a length of 2 bytes (namely, 16 bits), and can be used for addressing in a corresponding communication system. For example, for a SparkLink communication technology, the SparkLink network address may be used for addressing in a SparkLink communication system. It may be understood that the SparkLink network address is another address type different from an IP address. The custom address may be of a type 2, and occupies 1 to 16 bytes. The internet protocol version 4 (IPv4) address may be of a type 4, and occupies a maximum of 4 bytes. The internet protocol version 6 (IPv6) address may be of a type 6, and occupies a maximum of 16 bytes. The address type field may be indicated by using N bits. When a value of the N bits is a first value, the first address type is indicated, where N is a positive integer greater than or equal to 0. For example, when the first value is 0000001, it indicates that the first address type is a SparkLink network address. When the first value is 0000010, it indicates that the first address type is a custom address. When the first value is 0000100, it indicates that the first address type is an IPv4 address. When the first value is 0000110, it indicates that the first address type is an IPv6 address.

The target system identifier field indicates identification information of a node for which the first network address is configured. When the first message is a request message, the target system identifier field is a default value or a fixed value, and the request message is used to query whether an address conflict exists in the first network address. For example, when the first message is a request message, the target system identifier field may be a default value, for example, 0. The target system identifier field may be configured by a user, or may be obtained based on an identifier of a device. The identifier of the device may be a media access layer identifier, for example, a layer 2 identifier (Layer 2 Identification, L2ID). The identifier of the device is unique. When the target system identifier field may be configured by the user, the target system identifier field may be changed.

The first message may further include a network address length field, a source network address field, a source system identifier field, or a reserved field. The network address length field indicates a length of the target network address field or the source network address field, and is in a unit of byte. For example, when a target network address or the source network address field is of the type 4 and occupies the maximum of 4 bytes, the address length indicated by the network address length field is 4. The source network address field indicates a network address of a node that initiates detection or query, and may be a unicast address. The source system identifier field indicates an identifier of the node that initiates detection or query. For example, the node that initiates detection or query is the first node, a network address 1.1 is configured for the first node, and currently, the first network address is newly configured for the first node. The first network address is 100.1. In this case, the source network address field may be 1.1, and the source system identifier field may be an identifier of the first node, for example, 1234.1234.1234. For another example, the node that initiates detection or query is the first node, no network address is configured for the first node, and currently, the first network address is configured for the first node. The first network address is 100.1. In this case, the source network address field may be a default value, for example, 0, and the source system identifier field may be an identifier of the first node, for example, 1234.1234.1234. At least one of the length of the target network address field and the length of the source network address field is variable.

The first message may include a frame header part and a data part. The data part includes an address query protocol (address query protocol, AQP) part. The address query protocol part includes the target network address field, the address type field, and the target system identifier field. The address query protocol part may further include the network address length field, the source network address field, the source system identifier field, or the reserved field. The first message is sent in a broadcast manner, the first message is carried in a common layer broadcast protocol, and a destination address of the frame header part of the first message may be a broadcast address, for example, 255.255.

In an example, FIG. 4 is a diagram of a scenario according to an embodiment of this application. It is assumed that a second network address 1.1 is configured for a node S, and currently, a first network address 100.1 is newly configured for the node S. In this case, the node S initiates address conflict detection or query, to check whether the first network address 100.1 is configured for a node in a network. The node S may send a first message in a broadcast manner, where the first message is used for address conflict detection or query, a frame header part of the first message is shown in Table 1, and a data part of the first message is shown in Table 2. It is learned from Table 1 that, because the second network address 1.1 is configured for the node S, a source address of the frame header part of the first message is 1.1. Because the first message is sent in the broadcast manner, a destination address of the frame header part of the first message is 255.255. It is learned from Table 2 that the target network address field indicates the first network address, and the first network address may be a to-be-detected or to-be-queried network address. Because the network address 100.1 is newly configured for the node S, the target network address field indicates that the first network address is 100.1. The address type field may be a first address type corresponding to the first network address. For example, the first address type may be a SparkLink network address. The target system identifier field indicates identification information of a node for which the first network address is configured. In this case, whether a conflict exists in the first network address needs to be queried. Therefore, the target system identifier field may be a preset value, for example, 0. The source network address field indicates a network address of a node that initiates detection or query, namely, the network address of the node S. Therefore, the source network address field may be 1.1. The source system identifier field indicates an identifier of the node that initiates detection or query, namely, an identifier of the node S. For example, the identifier of the node S is 1234.1234.1234. The network address length field indicates a length of the target network address field or the source network address field. The first network address indicated by the target network address field is 100.1, and the source network address field may be 1.1. In this case, the length indicated by the network address length field may be 2.

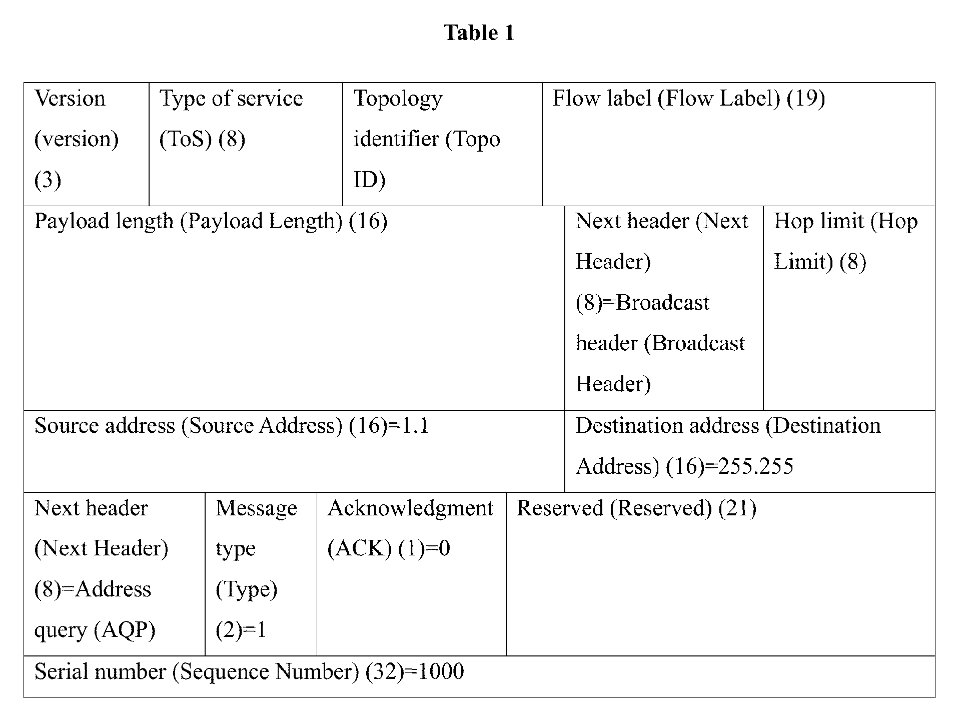

**Table 2**

| | | |
|---|---|---|
| Reserved field (bit) (1) | Address type field (Address Family) (7) | 1 |
| Network address length (Network Address Length)=2 | | 1 |
| Target network address (Target network address)=100.1 | | Variable length |
| Target system identifier (Target System Id)=0 | | 6 |
| Source network address (Src Network Address)=1.1 | | Variable length |
| Source system identifier (Src System Id)=1234.1234.1234 | | 6 |

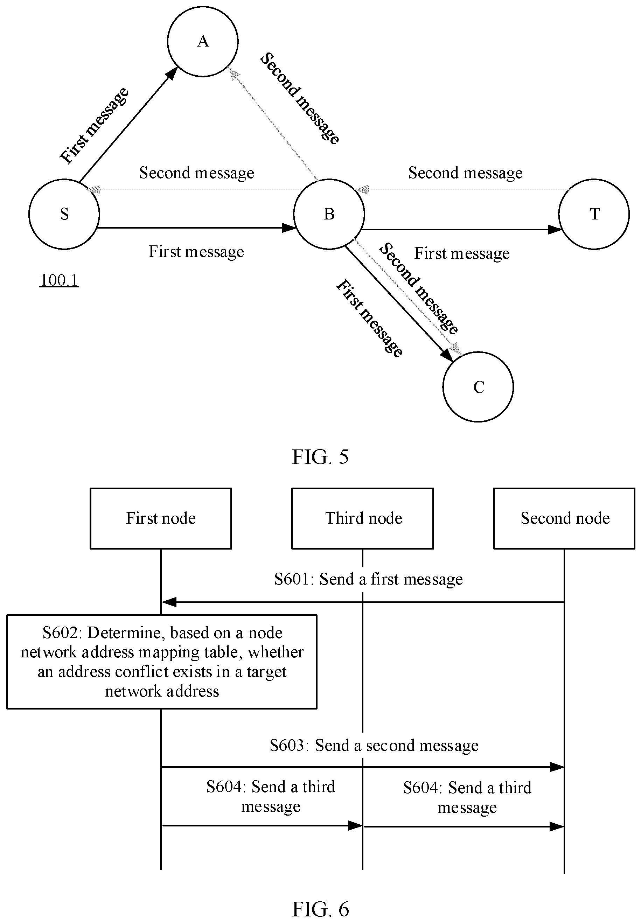

In another example, FIG. 5 is a diagram of a scenario according to an embodiment of this application. It is assumed that a first network address 100.1 needs to be configured for a node S, and no network address other than the first network address is configured for the node S. In this case, the node S initiates address conflict detection or query, to check whether the first network address 100.1 is configured for a node in a network. The node S may send a first message in a broadcast manner, where the first message is used for address conflict detection or query, a frame header part of the first message is shown in Table 3, and a data part of the first message is shown in Table 4. It is learned from Table 3 that, because no network address other than the first network address is configured for the node S, a source address of the frame header part of the first message may be a default value or a fixed value. For example, the default value may be 0.0. Because the first message is sent in the broadcast manner, a destination address of the frame header part of the first message is 255.255. It is learned from Table 4 that the target network address field indicates a first network address, and the first network address may be a to-be-detected or to-be-queried network address. Because the first network address 100.1 needs to be configured for the node S, the target network address field indicates that the first network address is 100.1. The address type field may be a first address type corresponding to the first network address. For example, the first address type may be a SparkLink network address. The target system identifier field indicates identification information of a node for which the first network address is configured. In this case, whether a conflict exists in the first network address needs to be queried. Therefore, the target system identifier field may be a preset value, for example, 0. The source network address field indicates a network address of a node that initiates detection or query, namely, the network address of the node S. Because no network address other than the first network address is configured for the node S, the source network address field may be a default value or a fixed value. For example, the default value may be 0.0. The source system identifier field indicates an identifier of the node that initiates detection or query, namely, an identifier of the node S. For example, the identifier of the node S is 1234.1234.1234. The network address length field indicates a length of the target network address field or the source network address field. The first network address indicated by the target network address field is 100.1, and the source network address field may be 0.0. In this case, the length indicated by the network address length field may be 2.

**Table 3**

| | | | | | |
|---|---|---|---|---|---|
| Version (version) (3) | Type of service (ToS) (8) | Topology identifier (Topo ID) | Flow label (Flow Label) (19) | | |
| Payload length (Payload Length) (16) | | | | Next header (Next Header) | Hop limit (Hop Limit) (8) |
| | | | | (8)=Broadcast header (Broadcast Header) | |
| Source address (Source Address) (16)=0.0 | | | | Destination address (Destination Address) (16)=255.255 | |
| Next header (Next Header) (8)=Address query (AQP) | Message type (Type) (2)=1 | Acknowledgment (ACK) (1)=0 | Reserved (Reserved) (21) | | |
| Serial number (Sequence Number) (32)=1000 | | | | | |

**Table 4**

| | | |
|---|---|---|
| Reserved field (bit) (1) | Address type field (Address Family) (7) | 1 |
| Network address length (Network Address Length)=2 | | 1 |
| Target network address (Target network address)=100.1 | | Variable length |
| Target system identifier (Target System Id)=0 | | 6 |
| Source network address (Src Network Address)=0.0 | | Variable length |
| Source system identifier (Src System Id)=1234.1234.1234 | | 6 |

S302: The second node sends a second message to the first node, and correspondingly, the first node receives the second message from the second node.

It should be noted that the second node may be any node in the network, and the first node is the node that initiates network address detection or query. For example, in (a) in FIG. 1, the second node may be any node T in the nodes T1, T2, ..., and Tn or the node G, and the first node may be a node, other than the second node, that initiates network address detection or query. In (b) in FIG. 1, the second node may be any one of the nodes T1, T2, and T3, or any one of the nodes G1, G2, G3, and G4, and the first node may be a node, other than the second node, that initiates network address detection or query. In (c) in FIG. 1, the second node may be any one of the nodes T1, T2, T3, and T4, or any one of the nodes G1, G2, and G3, the first node may be a node, other than the second node, that initiates network address detection or query.

The second node may send the second message to the first node in a unicast manner, or may send the second message in a broadcast manner. When a source address of the frame header part of the first message is not a default value or is not a default value, but is a unicast address, the second node may send the second message in the unicast manner. When a source address of the frame header part of the first message is a default value or a fixed value, the second node may send the second message in the broadcast manner. The second message indicates whether the address conflict exists in the first network address. In other words, it may be understood that when a source network address of the data part of the first message is not a default value or a fixed value or a default value, but is a unicast address, the second node may send the second message in the unicast manner. When a source network address of the data part of the first message is a default value or a fixed value, the second node may send the second message in the broadcast manner. When the second message is a response message, the target system identifier field is identification information of the second node. The response message is used to respond to a request for querying whether the address conflict exists in the first network address.

The second message includes the target network address field, the address type field, and the target system identifier field. The target network address field indicates the first network address, the address type field indicates the first address type corresponding to the first network address, the first address type is one of the plurality of address types, and the target system identifier field indicates an identifier of the node for which the first network address is configured. For details, refer to related descriptions in step S301.

The second message may further include the network address length field, the source network address field, the source system identifier field, or the reserved field. The network address length field indicates the length of the target network address field or the source network address field, and is in a unit of byte. The source network address field indicates the network address of the node that initiates detection or query, and may be a unicast address. The source system identifier field indicates the identifier of the node that initiates detection or query. At least one of the length of the target network address field and the length of the source network address field is variable. For details, refer to related descriptions in step S301.

The second message may include a frame header part and a data part. The data part includes an AQP part. The AQP part includes the target network address field, the address type field, and the target system identifier field. The AQP part may further include the network address length field, the source network address field, the source system identifier field, or the reserved field. For details, refer to related descriptions in step S301.

Optionally, if a second network address is configured for the first node, the source network address field in the second message includes the second network address, where the second network address is different from the first network address. In other words, it may be understood that, when the second network address is configured for the first node, the source network address field in the first message includes the second network address. Correspondingly, the source network address field in the second message includes the second network address. For example, the second network address 1.1 is configured for the first node, and currently, the first network address is newly configured for the first node. That is, the first network address is 100.1. The source network address field in the first message may be 1.1. Correspondingly, the source network address field in the second message may be 1.1.

Optionally, if no network address other than the first network address is configured for the first node, the source network address field in the second message is a default value or a fixed value. In other words, it may be understood that, when no network address other than the first network address is configured for the first node, the source network address field in the first message includes a default value or a fixed value. Correspondingly, the source network address field in the second message includes the default value or the default value. For another example, the node that initiates detection or query is the first node, no network address other than the first network address is configured for the first node, and currently, the first network address is configured for the first node, that is, the first network address is 100.1. The source network address field in the first message may be a default value, for example, 0. Correspondingly, the source network address field in the second message may be the default value, for example, 0.

In an example, FIG. 4 is a diagram of a scenario according to an embodiment of this application. It is assumed that a second network address 1.1 is configured for a node S, and currently, a first network address 100.1 is newly configured for the node S. In this case, the node S initiates address conflict detection or query, to check whether the first network address 100.1 is configured for a node in a network. It is assumed that a frame header part of a first message is shown in Table 1, and a data part of the first message is shown in Table 2. It is assumed that the first network address 100.1 is configured for a node T in the network. After receiving the first message, the T parses the first message, and determines that a target network address field in the first message indicates that the first network address 100.1 is the same as a network address of the T. In this case, the node T may send a second message to the node S in a unicast manner. A frame header part of the second message is shown in Table 5, and a data part of the second message is shown in Table 6. It is learned from Table 5 that, because the first network address 100.1 is configured for the node T, a source address of the frame header part of the second message is 100.1, and because the second network address 1.1 is configured for the node S, a destination address of the frame header part of the second message is 1.1. According to Table 6, it can be learned from Table 2 that the target network address field in the data part of the first message indicates a first network address, and the first network address may be a to-be-detected or to-be-queried network address. Therefore, the target network address field in the data part of the second message indicates that the first network address is 100.1. The target system identifier field indicates an identifier of a node for which the first network address is configured, the first network address 100.1 is configured for the node T, and the target system identifier field indicates an identifier of the node T, for example, 2222.2222.2222. It can be learned from the source network address field, the source system identifier field, and a network length field in the data part of the first message that the source network address field in the data part of the second message may be 1.1, the source system identifier field may be 1234.1234.1234, and a length indicated by the network length field may be 2.

**Table 5**

| | | | | | | | | |
|---|---|---|---|---|---|---|---|---|
| Version (version) (3) | Type of service (ToS) (8) | | | Topology identifier (Topo ID) | | Flow label (Flow Label) (19) | | |
| Payload length (Payload Length) (16) | | | | | | | Next header (Next Header) (8)=Broadcast header (Broadcast Header) | Hop limit (Hop Limit) (8) |
| Source address (Source Address) (16)=100.1 | | | | | | | Destination address (Destination Address) (16)=1.1 | |
| Next header (Next Header) (8)=Address query (AQP) | | Message type (Type) (2)=1 | Acknowledgment (ACK) (1)=1 | | Reserved (Reserved) (21) | | | |
| Serial number (Sequence Number) (32)=1000 | | | | | | | | |

**Table 6**

| | | |
|---|---|---|
| Reserved field (bit) (1) | Address type field (Address Family) (7) | 1 |
| Network address length (Network Address Length)=2 | | 1 |
| Target network address (Target network address)=100.1 | | Variable length |
| Target system identifier (Target System Id)=2222.2222.2222 | | 6 |
| Source network address (Src Network Address)=1.1 | | Variable length |
| Source system identifier (Src System Id)=1234.1234.1234 | | 6 |

In another example, FIG. 5 is a diagram of a scenario according to an embodiment of this application. It is assumed that a first network address 100.1 needs to be configured for a node S, and no network address other than the first network address is configured for the node S. In this case, the node S initiates address conflict detection or query, to check whether the first network address 100.1 is configured for a node in a network. It is assumed that a frame header part of a first message is shown in Table 3, and a data part of the first message is shown in Table 4. It is assumed that the network address 100.1 is configured for a node T in the network. After receiving the first message, the T parses the first message, and determines that a target network address field in the first message indicates that the first network address 100.1 is the same as a network address of the T. In this case, the node T may send a second message to the node S in a broadcast manner. A frame header part of the second message is shown in Table 7, and a data part of the second message is shown in Table 8. It is learned from Table 7 that, because the first network address 100.1 is configured for the node T, a source address of the frame header part of the second message is 100.1, and because no network address other than the first network address is configured for the node S, a destination address of the frame header part of the second message is 255.255. According to Table 8, it can be learned from Table 4 that the target network address field in the data part of the first message indicates a first network address, and the first network address may be a to-be-detected or to-be-queried network address. Therefore, the target network address field in the data part of the second message indicates that the first network address is 100.1. The target system identifier field indicates an identifier of a node for which the first network address is configured, the first network address 100.1 is configured for the node T, and the target system identifier field indicates an identifier of the node T, for example, 2222.2222.2222. It can be learned from the source network address field, the source system identifier field, and a network length field in the data part of the first message that the source network address field in the data part of the second message may be 0.0, the source system identifier field may be 1234.1234.1234, and a length indicated by the network length field may be 2.

**Table 7**

| | | | | | |
|---|---|---|---|---|---|
| Version (version) (3) | Type of service (ToS) (8) | Topology identifier (Topo ID) | Flow label (Flow Label) (19) | | |
| Payload length (Payload Length) (16) | | | | Next header (Next Header) (8)=Broadcast header (Broadcast Header) | Hop limit (Hop Limit) (8) |
| Source address (Source Address) (16)=100.1 | | | | | Destination address (Destination Address) (16)=255.255 |
| Next header (Next Header) (8)=Address query (AQP) | Message type (Type) (2)=1 | Acknowledgment (ACK) (1)=1 | | Reserved (Reserved) (21) | |
| Serial number (Sequence Number) (32)=1000 | | | | | |

**Table 8**

| | | |
|---|---|---|
| Reserved field (bit) (1) | Address type field (Address Family) (7) | 1 |
| Network address length (Network Address Length)=2 | | 1 |
| Target network address (Target network address)=100.1 | | Variable length |
| Target system identifier (Target System Id)=2222.2222.2222 | | 6 |
| Source network address (Src Network Address)=0 | | Variable length |
| Source system identifier (Src System Id)=1234.1234.1234 | | 6 |

In the foregoing method, the first message includes the target network address field, the address type field, and the target system identifier field, so that address conflict detection can be implemented in the entire network. In this way, the user is notified in time of a root cause of the address conflict, to help the user eliminate an address conflict configuration as soon as possible and effectively reduce impact on a service. In addition, the first message includes the address type field, so that address conflict detection of a plurality of address types can be implemented. This improves diversity.

FIG. 6 is a flowchart of another address conflict detection method according to an embodiment of this application. Optionally, the method may be implemented based on the foregoing communication system, for example, the communication system shown in FIG. 1. The method includes but is not limited to the following steps.

S601: A second node sends a first message to a first node, and correspondingly, the first node receives the first message from the second node.

The first message includes a network address of a third node and a target network address. The target network address may be a SparkLink network address, and the network address of the third node may be a SparkLink network address. The third node is a neighbor of the second node, and the third node is a relay node of the first node and the second node. That the third node is a neighbor of the second node may be understood as that the third node and the second node are two directly connected nodes, and are neighboring nodes of each other. That the third node is a neighbor of the first node may be understood as that the third node and the first node are two directly connected nodes, and are neighboring nodes of each other. The second node may send the first message to the first node in a unicast manner. It should be noted that the second node may be any node. For example, the second node may be a terminal node, and the first node is an address resolver node. For example, in (a) in FIG. 1, the second node may be any node T in the nodes T1, T2, ..., and Tn or the node G, the first node may be an address resolver node, and the third node is a relay node of the first node and the second node. In (b) in FIG. 1, the second node may be any one of the nodes T1, T2, and T3, or any one of the nodes G1, G2, G3, and G4, the first node may be an address resolver node, and the third node is a relay node of the first node and the second node. In (c) in FIG. 1, the second node may be any one of the nodes T1, T2, T3, and T4, or any one of the nodes G1, G2, and G3, the first node may be an address resolver node, and the third node is a relay node of the first node and the second node.

The first node stores a node network address mapping table. The node network address mapping table is used for address conflict detection. It may be understood that the node network address mapping table is used to determine whether an address conflict exists in the target network address.

S602: The first node determines, based on the node network address mapping table, whether an address conflict exists in the target network address.

The node network address mapping table indicates a mapping relationship between identification information of a plurality of nodes and network addresses of the plurality of nodes, and the plurality of nodes include the second node and the third node. It may be understood that the node network address mapping table includes a mapping relationship between identification information of the second node and a network address of the second node, and a mapping relationship between identification information of the third node and the network address of the third node. An identifier of a node may correspond to a plurality of network addresses of the node. For example, identification information of a node 1 includes an ID 1, and the node 1 includes two network addresses: an address 1 and an address 2.

Optionally, that the first node determines, based on the node network address mapping table, whether an address conflict exists in the target network address includes the following manner: The first node matches the target network address with the network addresses of the nodes in the node network address mapping table; and if the matching succeeds, the first node determines that the address conflict exists in the target network address; or if the matching fails, the first node determines that no address conflict exists in the target network address.

In an example, for example, the target network address is 100.2, and the node network address mapping table is shown in Table 9. The first node matches 100.2 with the network addresses in the node network address mapping table, and determines that a network address of a node corresponding to the identifier ID 1 of the node is 100.2, that is, the matching succeeds. In this case, the first node determines that the address conflict exists in the target network address.

**Table 9**

| Identifier of a node | Network address of the node |
|---|---|
| ID 1 | 100.2 |
| ID 1 | 2.1 |
| ID 2 | 102.1 |
| ID 3 | 105.1 |
| ID 3 | 110.2 |

S603: The first node sends a second message to the second node.

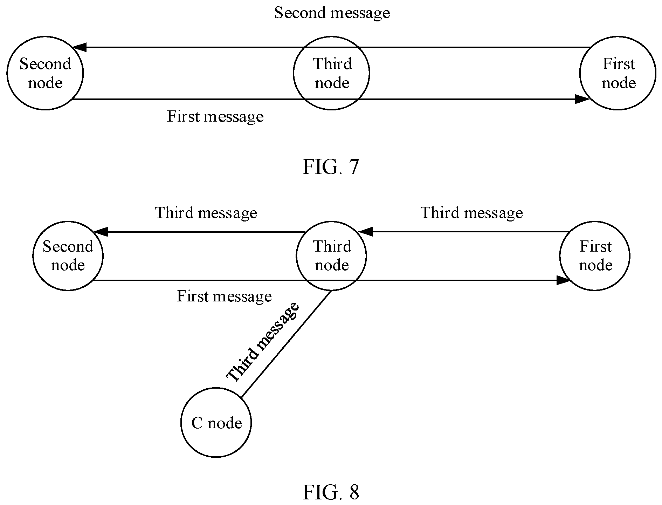

The second message indicates that no address conflict exists in the target network address. In other words, it may be understood that, when the first node determines that no address conflict exists in the target network address, the first node directly sends the second message to the second node, where the second message indicates that no address conflict exists in the target network address. The first node directly sends the second message to the second node. The first node locally queries a forwarding entry based on the target network address, and then forwards the second message to the second node, which is specifically reflected in the following manner: As shown in FIG. 7, a layer-3 packet from the first node to the second node does not change, where the layer-3 packet includes the second message, but a layer-2 packet header from the first node to the third node changes. After a packet is transmitted to the third node, a layer-2 packet header from the second node to the third node is deleted, the layer-2 packet header from the second node to the third node is re-encapsulated into a layer-2 packet header from the third node to the second node, and the layer-2 packet header from the third node to the second node is transmitted to the second node.

S604: The first node sends a third message to the second node by using the third node.

The third message indicates that the address conflict exists in the target network address. In other words, it may be understood that, when the first node determines, based on the node network address mapping table, that a conflict exists in the target network address, the first node sends the third message to the third node in the unicast manner based on the network address of the third node, and then the third node sends the third message to all neighbors except the first node. Correspondingly, the second node receives the third message from the third node, and determines that the address conflict exists in the target network address. As shown in FIG. 8, the first node sends the third message to the third node. After receiving the third message, the third node may make two duplicates of the third message, and respectively send the two duplicates of the third message to the second node and a node C.

The third message may be a general message packet data unit (general message packet data unit, GMP) packet. A format of the GMP packet is shown in Table 10. A variable length field in the GMP packet may indicate whether an address conflict exists in the target network address. For example, when the variable length field in the GMP packet is 1, it indicates that the address conflict exists in the target network address.

**Table 10**

| | |
|---|---|
| Network layer protocol identifier (Network Layer Protocol Identifier) | 1 |
| Version (Version) | 1 |
| Message type (Message Type) | 1 |
| Local system identifier (Source System ID) | 6 |
| Identifier of an air interface for sending a packet locally (Source Interface ID) | 1 |
| Packet length (PDU Length) | 2 |
| Checksum (Checksum) | 2 |
| Sequence number (Sequence Number) | 4 |
| Variable length field (Variable Length Field) | Variable length |

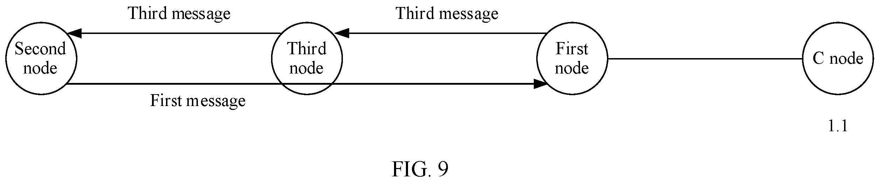

In the foregoing method, the first node sends the third message to the third node in the unicast manner based on the network address of the third node, so that the third node forwards the third message to the second node. This can avoid excessive load caused by a broadcast packet to a network. For example, as shown in FIG. 9, the second node needs to configure the target network address as 1.1, the third node is a relay node of the first node and the second node, and the network address 1.1 is configured for the node C. After the first node detects that a conflict exists in the target network address, if the first node sends the third message based on the target network address 1.1, the node C also receives the third message. In this case, signaling overheads are increased. Therefore, the third message is sent to the third node in the unicast manner, so that the third node forwards the third message to the second node. This reduces signaling overheads, and avoids excessive load caused by the broadcast packet to the network.

In the foregoing method, the first node may send the second message to the second node in the unicast manner, or send the third message to the third node in the unicast manner. In this manner, more load caused by the broadcast packet to the network can be avoided. This reduces network overheads. In addition, in a manner in which the first node stores the node network address mapping table, the first node can detect an address conflict in the entire network.

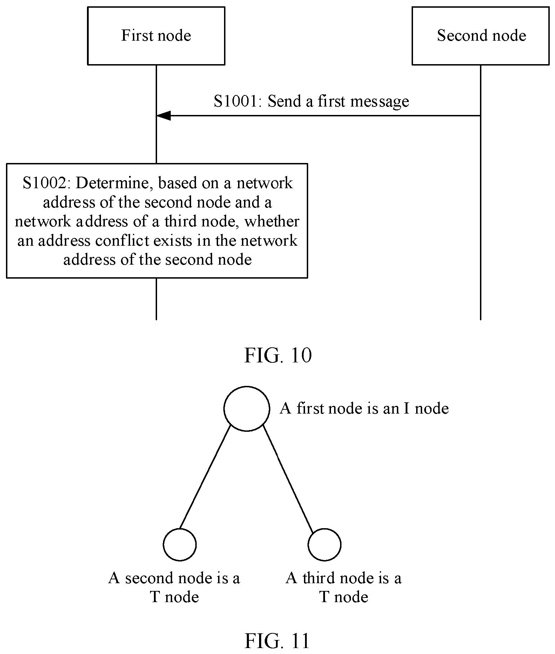

FIG. 10 is a flowchart of an address conflict detection method according to an embodiment of this application. Optionally, the method may be implemented based on the foregoing communication system, for example, the communication system shown in FIG. 1. The method includes but is not limited to the following steps.

S1001: A second node sends a first message to a first node, and correspondingly, the first node receives the first message from the second node.

The first message includes a network address of the second node. Optionally, the network address of the second node may be a SparkLink network address. Optionally, the first message may be carried in a hello packet, and the hello packet is used to discover a neighbor on a direct link and maintain a neighbor relationship.

S1002: The first node determines, based on the network address of the second node and a network address of a third node, whether an address conflict exists in the network address of the second node.

The first node may be an I node, the second node may be a T node, and the third node may be a T node. The first node and the second node are neighbors, and the first node and the third node are neighbors. That the first node and the second node are neighbors may be understood that the first node and the second node are two directly connected nodes, and are neighboring nodes of each other. That the first node and the third node are neighbors may be understood that the first node and the third node are two directly connected nodes, and are neighboring nodes of each other. For example, as shown in FIG. 11, the second node and the third node may be end nodes under the first node. The first node may establish a neighbor relationship with both the second node and the third node by using a wireless dynamic neighbor protocol (wireless adjacency protocol, WAP).

The network address of the third node has the following two manners. In a first manner, before the first node receives the network address from the second node, the first node stores the network address of the third node. In a second manner, before or after the first node receives the network address from the second node, the first node receives the network address from the third node. Optionally, the network address of the third node may be a SparkLink network address.

That the first node determines, based on the network address of the second node and a network address of a third node, whether a conflict exists in the network address of the second node specifically includes the following: (1) If the network address of the second node is the same as the network address of the third node, the first node sends a second message to the second node and the third node. The second message indicates that the address conflict exists in the network address of the second node. After receiving the second message, the second node and the third node may remind, in a manner like an alarm or a log, a user that the address conflict exists in the network address of the second node. Correspondingly, the user may modify the network address of the second node to resolve the address conflict. (2) If the network address of the second node is different from the network address of the third node, it is determined that no address conflict exists.

In the foregoing method, the first node determines, based on the network address of the second node and the network address of the third node, whether an address conflict exists in the network address of the second node, so that an address conflict in an entire network can be detected.

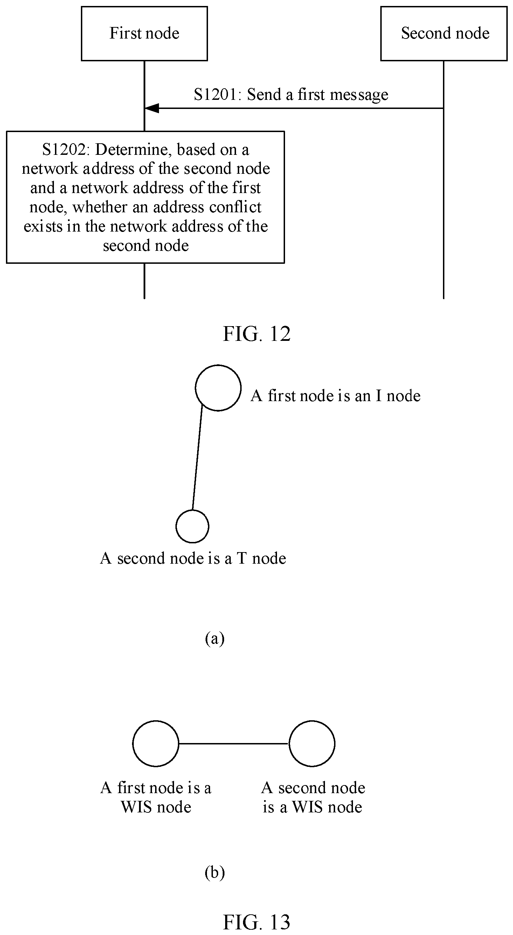

FIG. 12 is a flowchart of an address conflict detection method according to an embodiment of this application. Optionally, the method may be implemented based on the foregoing communication system, for example, the communication system shown in FIG. 1. The method includes but is not limited to the following steps.

S1201: A first node receives a first message from a second node.

The first message includes a network address of the second node. Optionally, the network address of the second node may be a SparkLink network address. Optionally, the first message may be carried in a hello packet, and the hello packet is used to discover a neighbor on a direct link and maintain a neighbor relationship.

S1202: The first node determines, based on the network address of the second node and a network address of the first node, whether an address conflict exists in the network address of the second node.

As shown in (a) in FIG. 13, the first node may be an I node, and correspondingly, the second node may be a T node, that is, the second node may be understood as an end node under the first node. Alternatively, as shown in (b) in FIG. 13, the first node may be an I node, correspondingly, the second node may be an I node. That the first node and the second node are neighbors may be understood that the first node and the second node are two directly connected nodes, and are neighboring nodes of each other. The first node may establish a neighbor relationship with the second node by using a wireless dynamic neighbor protocol (wireless adjacency protocol, WAP).

Optionally, the network address of the first node may be a SparkLink network address. That the first node determines, based on the network address of the second node and the network address of the first node, whether an address conflict exists in the network address of the second node may include the following two manners. In a first manner, if the network address of the second node is the same as the network address of the first node, the address conflict exists in the network address of the second node. In a second manner, if the network address of the second node is different from the network address of the first node, no address conflict exists in the network address of the second node.

In the foregoing method, the first node determines, based on the network address of the second node and the network address of the first node, whether an address conflict exists in the network address of the second node, so that an address conflict in an entire network can be detected.

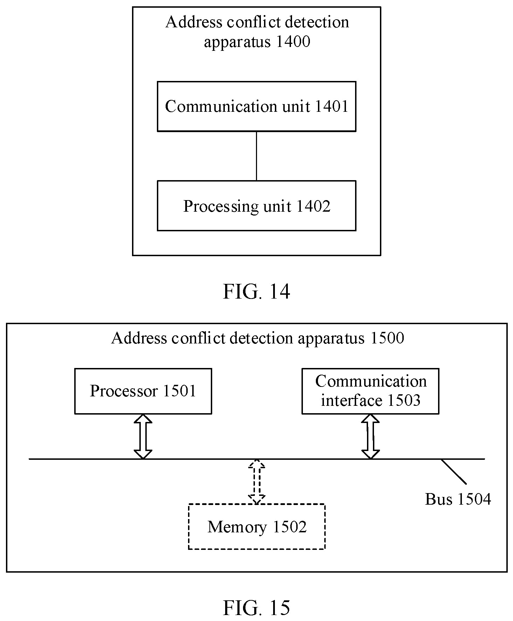

FIG. 14 is a diagram of a structure of an address conflict detection apparatus 1400 according to an embodiment of this application. The address conflict detection apparatus 1400 includes a communication unit 1401 and a processing unit 1402. The apparatus 1400 may be implemented by using hardware, software, or a combination of software and hardware.

The communication unit 1401 is configured to send a first message, where the first message includes a target network address field, an address type field, and a target system identifier field. The target network address field indicates a first network address. The address type field indicates a first address type corresponding to the first network address, and the first address type is one of a plurality of address types. The target system identifier field indicates identification information of a node for which the first network address is configured. The communication unit 1401 is further configured to receive a second message from a second node, where the second message indicates whether an address conflict exists in the first network address.

In a possible implementation, the plurality of address types include at least two of the following: a SparkLink network address, a custom address, an internet protocol version 4 (IPv4) address, or an internet protocol version 6 (IPv6) address.

In another possible implementation, when the first message is a request message, the target system identifier field is a default value or a fixed value. The request message is used to query whether an address conflict exists in the first network address.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node. In another possible implementation, the first message or the second message further includes at least one of the following: a network address length field, a source network address field, a source system identifier field, or a reserved field.

In another possible implementation, at least one of a length of the target network address field and a length of the source network address field is variable.

In another possible implementation, if a second network address is configured for the first node, the source network address field in the second message includes the second network address, where the second network address is different from the first network address.

In another possible implementation, if no network address other than the first network address is configured for the first node, the source network address field in the second message is a default value or a fixed value.

In another possible implementation, the address type field is indicated by using N bits, and when a value of the N bits is a first value, the first address type is indicated, where N is a positive integer greater than 0.

In another possible implementation, the first message includes a frame header part and a data part, the data part includes an address query protocol part, and the address query protocol part includes the target network address field, the address type field, and the target system identifier field.

It should be noted that, for implementations and beneficial effects of the units, refer to corresponding descriptions in the method embodiment shown in FIG. 3.

Optionally, detailed descriptions of the units in the apparatus 1400 for detecting an address conflict may be further as follows.

The communication unit 1401 is configured to receive a first message, where the first message includes a target network address field, an address type field, and a target system identifier field. The target network address field indicates a first network address. The address type field indicates a first address type corresponding to the first network address, and the first address type is one of a plurality of address types. The target system identifier field indicates identification information of a node for which the first network address is configured. The communication unit 1401 is further configured to send a second message to a first node, where the second message indicates whether an address conflict exists in the first network address.

In a possible implementation, the plurality of address types include at least two of the following: a SparkLink network address, a custom address, an internet protocol version 4 (IPv4) address, or an internet protocol version 6 (IPv6) address.

In another possible implementation, when the first message is a request message, the target system identifier field is a default value or a fixed value. The request message is used to query whether an address conflict exists in the first network address.

In another possible implementation, the second message includes the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

In another possible implementation, when the second message is a response message, the target system identifier field is identification information of the second node. In another possible implementation, the first message or the second message further includes at least one of the following: a network address length field, a source network address field, a source system identifier field, or a reserved field.

In another possible implementation, at least one of a length of the target network address field and a length of the source network address field is variable.

In another possible implementation, if a second network address is configured for the first node, the source network address field in the second message includes the second network address, where the second network address is different from the first network address.

In another possible implementation, if no network address other than the first network address is configured for the first node, the source network address field in the second message is a default value or a fixed value.

In another possible implementation, the address type field is indicated by using N bits, and when a value of the N bits is a first value, the first address type is indicated, where N is a positive integer greater than 0.

In another possible implementation, the first message includes a frame header part and a data part, the data part includes an address query protocol part, and the address query protocol part includes the target network address field, the address type field, and the target system identifier field.

It should be noted that, for implementations and beneficial effects of the units, refer to corresponding descriptions in the method embodiment shown in FIG. 3.

Optionally, detailed descriptions of the units in the apparatus 1400 for detecting an address conflict may be further as follows.

The communication unit 1401 is configured to receive a first message from a second node. The first message includes a network address of a third node and a target network address. The third node is a neighbor of the second node, and the third node is a relay node of the apparatus and the second node. The apparatus stores a node network address mapping table. The processing unit 1402 is configured to determine, based on the node network address mapping table, whether an address conflict exists in the target network address. The node network address mapping table indicates a mapping relationship between identification information of a plurality of nodes and network addresses of the plurality of nodes, where the plurality of nodes include the second node and the third node. The communication unit 1401 is further configured to send a second message to the second node. The second message indicates that no address conflict exists in the target network address, and the second message is a unicast message. Alternatively, the communication unit 1401 is further configured to send a third message to the second node by using the third node. The third message indicates that the address conflict exists in the target network address.

In a possible implementation, the second node is a terminal node.

In another possible implementation, the processing unit 1402 is configured to match the target network address with the network addresses of the node in the node network address mapping table. The processing unit 1402 is further configured to: if the matching succeeds, determine that the address conflict exists in the target network address. The processing unit 1402 is further configured to: if the matching fails, determine that no address conflict exists in the target network address.

It should be noted that, for implementations and beneficial effects of the units, refer to corresponding descriptions in the method embodiment shown in FIG. 6.

Optionally, detailed descriptions of the units in the apparatus 1400 for detecting an address conflict may be further as follows.

The communication unit 1401 is configured to send a first message to a first node. The first message includes a network address of a third node and a target network address. The third node is a neighbor of the apparatus, and the third node is a relay node of the first node and the apparatus. The first node stores a node network address mapping table. The node network address mapping table is used to determine whether an address conflict exists in the target network address. The node network address mapping table indicates a mapping relationship between identification information of a plurality of nodes and network addresses of the plurality of nodes, where the plurality of nodes includes the apparatus and the third node. The communication unit 1401 is configured to receive a second message from the first node. The second message indicates that no address conflict exists in the target network address, and the second message is a unicast message. Alternatively, the communication unit 1401 is configured to receive a third message from the third node. The third message indicates that the address conflict exists in the target network address.

In a possible implementation, the apparatus is a terminal node.

It should be noted that, for implementations and beneficial effects of the units, refer to corresponding descriptions in the method embodiment shown in FIG. 6.

FIG. 15 shows an address conflict detection apparatus 1500 according to an embodiment of this application. The address conflict detection apparatus 1500 includes at least one processor 1501 and a communication interface 1503, and optionally, further includes a memory 1502. The processor 1501, the memory 1502, and the communication interface 1503 are connected to each other by using a bus 1504. Optionally, the processor 1501 and the memory 1502 are integrated together.

The memory 1502 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1502 is configured to store related computer programs and data. The communication interface 1503 is configured to receive and send data.

The processor 1501 may be one or more central processing units (central processing units, CPUs). When the processor 1501 is one CPU, the CPU may be a single-core CPU, or may be a multi-core CPU.

The processor 1501 in the address conflict detection apparatus 1500 is configured to read computer program code stored in the memory 1502, to implement a function of the processing unit 1402, and the communication interface 1503 is configured to implement a function of the communication unit 1401.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner or may be implemented in a manner of executing a software instruction by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In descriptions of this application, terms such as "first", "second", "S601", or "S602" are merely used for distinguishing and description and for ease of organizing this specification. Different sequences or numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B, and C are included, where A, B, and C may be singular or plural.

## Claims

1. An address conflict detection method, wherein the method comprises:
sending, by a first node, a first message, wherein the first message comprises a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and
receiving, by the first node, a second message from a second node, wherein the second message indicates whether an address conflict exists in the first network address.

2. The method according to claim 1, wherein the plurality of address types comprise at least two of the following: a SparkLink network address, a custom address, an internet protocol version 4 (IPv4) address, or an internet protocol version 6 (IPv6) address.

3. The method according to claim 1 or 2, wherein when the first message is a request message, the target system identifier field is a default value or a fixed value.

4. The method according to any one of claims 1 to 3, wherein the second message comprises the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

5. The method according to claim 4, wherein when the second message is a response message, the target system identifier field is identification information of the second node.

6. The method according to any one of claims 1 to 5, wherein the first message or the second message further comprises at least one of the following: a network address length field, a source network address field, a source system identifier field, or a reserved field.

7. The method according to claim 6, wherein at least one of a length of the target network address field and a length of the source network address field is variable.

8. The method according to any one of claims 1 to 7, wherein
if a second network address is configured for the first node, the source network address field in the second message comprises the second network address, wherein the second network address is different from the first network address.

9. The method according to any one of claims 1 to 7, wherein
if no network address other than the first network address is configured for the first node, the source network address field in the second message is a default value or a fixed value.

10. An address conflict detection method, wherein the method comprises:
receiving, by a second node, a first message, wherein the first message comprises a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and
sending, by the second node, a second message to the first node, wherein the second message indicates whether an address conflict exists in the first network address.

11. The method according to claim 10, wherein the plurality of address types comprise at least two of the following: a SparkLink network address, a custom address, an internet protocol version 4 (IPv4) address, or an internet protocol version 6 (IPv6) address.

12. The method according to claim 10 or 11, wherein when the first message is a request message, the target system identifier field is a default value or a fixed value.

13. The method according to any one of claims 10 to 12, wherein the second message comprises the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

14. The method according to claim 13, wherein when the second message is a response message, the target system identifier field is identification information of the second node.

15. The method according to any one of claims 10 to 14, wherein the first message or the second message further comprises at least one of the following: a network address length field, a source network address field, a source system identifier field, or a reserved field.

16. The method according to claim 15, wherein at least one of a length of the target network address field and a length of the source network address field is variable.

17. The method according to any one of claims 10 to 16, wherein
if a second network address is configured for the first node, the source network address field in the second message comprises the second network address, wherein the second network address is different from the first network address.

18. The method according to any one of claims 10 to 16, wherein
if no network address other than the first network address is configured for the first node, the source network address field in the second message is a default value or a fixed value.

19. An address conflict detection method, comprising:
receiving, by the first node, a first message from a second node, wherein the first message comprises a network address of a third node and a target network address, the third node is a neighbor of the second node, the third node is a relay node of the first node and the second node, and the first node stores a node network address mapping table;
determining, by the first node based on the node network address mapping table, whether an address conflict exists in the target network address, wherein the node network address mapping table indicates a mapping relationship between identification information of a plurality of nodes and network addresses of the plurality of nodes, wherein the plurality of nodes comprise the second node and the third node; and
sending, by the first node, a second message to the second node, wherein the second message indicates that no address conflict exists in the target network address, and the second message is a unicast message; or
sending, by the first node, a third message to the second node by using the third node, wherein the third message indicates that the address conflict exists in the target network address.

20. The method according to claim 19, wherein the method further comprises:
the second node is a terminal node.

21. The method according to claim 19 or 20, wherein the determining, by the first node based on the node network address mapping table, whether an address conflict exists in the target network address comprises:
matching, by the first node, the target network address with the network addresses of the nodes in the node network address mapping table; and
if the matching succeeds, determining, by the first node, that the address conflict exists in the target network address; or
if the matching fails, determining, by the first node, that no address conflict exists in the target network address.

22. An address conflict detection method, comprising:
sending, by a second node, a first message to a first node, wherein the first message comprises a network address of a third node and a target network address, the third node is a neighbor of the second node, the third node is a relay node of the first node and the second node, the first node stores a node network address mapping table, the node network address mapping table is used to determine whether an address conflict exists in the target network address, and the node network address mapping table indicates a mapping relationship between identification information of a plurality of nodes and network addresses of the plurality of nodes, wherein the plurality of nodes comprise the second node and the third node; and
receiving, by the second node, a second message from the first node, wherein the second message indicates that no address conflict exists in the target network address, and the second message is a unicast message; or
receiving, by the second node, a third message from the third node, wherein the third message indicates that the address conflict exists in the target network address.

23. The method according to claim 22, wherein the method further comprises:
the second node is a terminal node.

24. An address conflict detection apparatus, comprising a communication unit and a processing unit, wherein
the communication unit is configured to send a first message, wherein the first message comprises a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and
the communication unit is further configured to receive a second message from a second node, wherein the second message indicates whether an address conflict exists in the first network address.

25. The apparatus according to claim 24, wherein the plurality of address types comprise at least two of the following: a SparkLink network address, a custom address, an internet protocol version 4 (IPv4) address, or an internet protocol version 6 (IPv6) address.

26. The apparatus according to claim 24 or 25, wherein when the first message is a request message, the target system identifier field is a default value or a fixed value.

27. The apparatus according to any one of claims 24 to 26, wherein the second message comprises the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

28. The apparatus according to claim 27, wherein when the second message is a response message, the target system identifier field is identification information of the second node.

29. The apparatus according to any one of claims 24 to 28, wherein the first message or the second message further comprises at least one of the following: a network address length field, a source network address field, a source system identifier field, or a reserved field.

30. The apparatus according to claim 29, wherein at least one of a length of the target network address field and a length of the source network address field is variable.

31. The apparatus according to any one of claims 24 to 30, wherein
if a second network address is configured for the first node, the source network address field in the second message comprises the second network address, wherein the second network address is different from the first network address.

32. The apparatus according to any one of claims 24 to 30, wherein
if no network address other than the first network address is configured for the first node, the source network address field in the second message is a default value or a fixed value.

33. An address conflict detection apparatus, comprising a communication unit and a processing unit, wherein
the communication unit is configured to receive a first message, wherein the first message comprises a target network address field, an address type field, and a target system identifier field, the target network address field indicates a first network address, the address type field indicates a first address type corresponding to the first network address, the first address type is one of a plurality of address types, and the target system identifier field indicates identification information of a node for which the first network address is configured; and
the communication unit is further configured to send a second message to a first node, wherein the second message indicates whether an address conflict exists in the first network address.

34. The apparatus according to claim 33, wherein the plurality of address types comprise at least two of the following: a SparkLink network address, a custom address, an internet protocol version 4 (IPv4) address, or an internet protocol version 6 (IPv6) address.

35. The apparatus according to claim 33 or 34, wherein when the first message is a request message, the target system identifier field is a default value or a fixed value.

36. The apparatus according to any one of claims 33 to 35, wherein the second message comprises the target network address field, the address type field, and the target system identifier field, the target network address field indicates the first network address, the address type field indicates the first address type corresponding to the first network address, the first address type is one of the plurality of address types, and the target system identifier field indicates the identification information of the node for which the first network address is configured.

37. The apparatus according to claim 36, wherein when the second message is a response message, the target system identifier field is identification information of the second node.

38. The apparatus according to any one of claims 33 to 37, wherein the first message or the second message further comprises at least one of the following: a network address length field, a source network address field, a source system identifier field, or a reserved field.

39. The apparatus according to claim 38, wherein at least one of a length of the target network address field and a length of the source network address field is variable.

40. The apparatus according to any one of claims 33 to 39, wherein
if a second network address is configured for the first node, the source network address field in the second message comprises the second network address, wherein the second network address is different from the first network address.

41. The apparatus according to any one of claims 33 to 39, wherein
if no network address other than the first network address is configured for the first node, the source network address field in the second message is a default value or a fixed value.

42. An address conflict detection apparatus, comprising a communication unit and a processing unit, wherein
the communication unit is configured to receive a first message from a second node, wherein the first message comprises a network address of a third node and a target network address, the third node is a neighbor of the second node, the third node is a relay node of the apparatus and the second node, the apparatus stores a node network address mapping table, and the node network address mapping table is used for address conflict detection;
the processing unit is configured to determine, based on the node network address mapping table, whether an address conflict exists in the target network address, wherein the node network address mapping table indicates a mapping relationship between identification information of a plurality of nodes and network addresses of the plurality of nodes, wherein the plurality of nodes comprise the second node and the third node; and
the communication unit is further configured to send a second message to the second node, wherein the second message indicates that no address conflict exists in the target network address, and the second message is a unicast message; or
the communication unit is further configured to send a third message to the second node by using the third node, wherein the third message indicates that the address conflict exists in the target network address.

43. The apparatus according to claim 42, wherein
the second node is a terminal node.

44. The apparatus according to claim 42 or 43, wherein
the processing unit is configured to match the target network address with the network addresses of the nodes in the node network address mapping table; and
the processing unit is further configured to: if the matching succeeds, determine that the address conflict exists in the target network address; or
the processing unit is further configured to: if the matching fails, determine that no address conflict exists in the target network address.

45. An address conflict detection apparatus, comprising a communication unit and a processing unit, wherein
the communication unit is configured to send a first message to a first node, wherein the first message comprises a network address of a third node and a target network address, the third node is a neighbor of the apparatus, the third node is a relay node of the first node and the apparatus, the first node stores a node network address mapping table, the node network address mapping table is used to determine whether an address conflict exists in the target network address, and the node network address mapping table indicates a mapping relationship between identification information of a plurality of nodes and network addresses of the plurality of nodes, wherein the plurality of nodes comprise the apparatus and the third node; and
the communication unit is further configured to receive a second message from the first node, wherein the second message indicates that no address conflict exists in the target network address, and the second message is a unicast message; or
the communication unit is further configured to receive a third message from the third node, wherein the third message indicates that the address conflict exists in the target network address.

46. The apparatus according to claim 45, wherein
the apparatus is a terminal node.

47. An address conflict detection apparatus, wherein the address conflict detection apparatus comprises at least one processor and a communication interface, wherein
the communication interface is configured to receive and/or send data, and/or the communication interface is configured to provide input and/or output for the processor; and
the at least one processor is configured to implement the method according to any one of claims 1 to 9.

48. An address conflict detection apparatus, wherein the address conflict detection apparatus comprises at least one processor and a communication interface, wherein
the communication interface is configured to receive and/or send data, and/or the communication interface is configured to provide input and/or output for the processor; and
the at least one processor is configured to implement the method according to any one of claims 10 to 18.

49. An address conflict detection apparatus, wherein the address conflict detection apparatus comprises at least one processor and a communication interface, wherein
the communication interface is configured to receive and/or send data, and/or the communication interface is configured to provide input and/or output for the processor; and
the at least one processor is configured to implement the method according to any one of claims 19 to 21.

50. An address conflict detection apparatus, wherein the address conflict detection apparatus comprises at least one processor and a communication interface, wherein
the communication interface is configured to receive and/or send data, and/or the communication interface is configured to provide input and/or output for the processor; and
the at least one processor is configured to implement the method according to any one of claims 21 to 24.

51. A computer-readable storage medium, wherein the computer-readable storage medium stores computer instructions, and when the instructions are run on a processor, the method according to any one of claims 1 to 24 is implemented.
